# EUROPEAN PATENT SPECIFICATION

(11) **EP 2 224 819 B1**
(45) Date of publication and mention of the grant of the patent: **31.10.2018**
(21) Application number: 08860597.7
(22) Date of filing: 12.12.2008
(51) Int. Cl.: A23D 9/00, C11B 3/00, C11B 3/16, C10L 1/02, B01D 21/26, B01D 24/00

(54) **METHOD FOR PREPARING A FUEL OIL**
VERFAHREN ZUR HERSTELLUNG EINES HEIZÖLS
PROCÉDÉ POUR PRÉPARER UN FIOUL

(30) Priority: 13.12.2007 GB 0724302
(43) Date of publication of application: 08.09.2010
(73) Proprietor: Living Fuels Limited, Norfolks PE30 1HJ (GB)
(72) Inventor: POCKNELL, Tony, Michael, Norfolk PE32 1AB (GB); VENNI, Adrian, Kurt, IP300RT (GB)
(74) Representative: Akers, Noel James
(86) International application number: PCT/GB2008/004152
(87) International publication number: WO 2009/074816

(56) References cited:
- EP-A- 0 348 004
- FR-A- 2 577 938
- GB-A- 661 921
- RU-C1- 2 218 386
- US-A- 2 558 869
- US-A- 3 984 447
- US-A1- 2005 006 290
- US-B1- 6 254 790
- BAHADUR N P; BOOCOCK D G B; KONAR S K: "Liquid hydrocarbons from catalytic pyrolysis of sewage sludge lipid and canola oil: evaluation of fuel properties" ENERGY AND FUELS, vol. 9, no. 2, 1995, pages 248-256, XP002533582

## Description

The present invention relates to a method for recycling used oil, in particular oil used for cooking recovered from restaurants and the like, and to a recycled oil produced by the same. The present invention further relates to the use of such recycled oil as a fuel, in particular as a fuel for use in the generation of power.

Edible oils and fats are used in a wide range of cooking operations on a commercial scale. Examples of such operations include the frying, in particular the deep fat frying, of foodstuffs, especially to meet the demands for so-called 'fast foods'. As a result of the need for frequent replacement and renewal of such oils, significant amounts of used or waste oils used in such commercial cooking operations are produced and require disposal. The disposal of used or waste cooking oils presents a growing environmental problem. Conventional techniques for disposal, in particular landfill, are no longer favoured. In the past, waste edible oils and fats were used in the preparation of animal feeds. Such use has given rise to concern regarding the possible spread of diseases within the animal population, for example BSE. As a result, the use of waste edible oils and fats in animal feedstuffs has been banned in the United Kingdom since 2004. The options for disposing of waste oils and fats used in cooking are therefore limited.

One method of treating the waste oils and fats that has been proposed is the conversion of the waste materials into so-called 'biodiesel'. The process for converting the waste cooking oil to a useable fuel generally comprises treating the waste oil to an esterification process.

Thus, KR 2002 0034712 discloses a process for making a fuel from rice bran oil and waste cooking oil. The process comprises a first esterification step, in which the purified oil is reacted in a first esterification step with gaseous methyl alcohol in the presence of a PTSA catalyst. A second esterification step comprises treating the oil with methyl alcohol in admixture with sodium hydroxide, after which crude glycerine is allowed to separate from the oil. Methyl ester is recovered by rinsing with hot water, dehydration and distillation.

More recently, GB 2,436,836 discloses a process for the removal of free fatty acids from used cooking oil prior to the production of biodiesel. The process includes mixing the used cooking oil with virgin vegetable oil to provide a mixture having a target free fatty acid content. The resulting mixture is purified by mixing with hot water, prior to centrifuging to remove particulates from the oil. The resulting oil mixture is heated, dried and de-aerated in a vacuum drier. The resulting oil is steam stripped to remove the free fatty acids by distillation, before being processed to a biodiesel by transesterification.

JP 2005 350631 discloses a method for producing a biodiesel fuel from a stock oil containing a free fatty acid. The method comprises removing the free fatty acids and treating the resulting oil with an alkyl catalyst.

The preparation of biodiesel by esterification processes has become one of the most popular proposals for the treatment of waste cooking oils. Indeed, simple processing equipment for such treatments are now being made available commercial for small scale production, for example the Twyn Tub 100 biodiesel plant available from Goat Industries, United Kingdom.

Esterification and the preparation of biodiesel is a particularly complex process, relying on the use of a significant number of processing stages and additional components, such as esterification catalysts and the like. It would be most advantageous if an alternative manner of using the waste oil and processing the waste cooking oil into a useable fuel could be provided.

KR 2001 0045991 discloses an environmentally friendly fuel oil prepared from a mixture of waste cooking oil and agents for accelerating combustion. The fuel oil comprises from 30 to 90 parts by weight of filtered and refined cooking oil, 1 to 60 parts by weight of naphtha, gasoline or thinner, and 0.01 to 10 parts by weight of a low alcohol solution of molybdenum compounds or sodium hydroxide or a mixture thereof. The waste cooking oil may be soya bean oil, castor oil, cottonseed oil, coconut oil, paulownia seed oil, or fish oil. While the fuel oil produced by this process may be environmentally friendly, it relies upon the use of significant quantities of conventional hydrocarbon fuels and additives to render the waste cooking oil useable.

JP 2006 097671 discloses an alternative approach to treating waste cooking oil, in which the waste cooking oil is mixed with waste lubricating oil at a prescribed ratio. The mixture is heat treated to decompose the oils and the resulting gaseous products reformed using a suitable catalyst. The reformed gases are cooled to provide a condensed liquid fuel and purified to produce a reformed fuel oil. The reformed fuel oil may be used as a fuel in a diesel engine or a gas turbine. Again, the process is particularly complex and relies upon the conversion of the waste oil materials into a reformed fuel oil before a useable fuel is obtained.

US 2005/0006290 discloses a mobile biodiesel refinery. The mobile refinery is suitable for processing used cooking oil and the like. The used oil is processed by first heated and then subjected to a straining or filtration process. Thereafter, water is removed by settling from the heated oil. Subsequently, the oil is treated with a catalyst. Again, this process is particularly complex and requires the use of a catalyst to convert the used oil. There is a need for a simpler process for treating used cooking oil and the like.

US 2007/0119095 concerns a hybrid diesel fuel. The fuel is prepared from virgin or waste biosynthetic oil by first heating the oil and passing through a filter. Further filtration is applied should this be required.

A biofuel conversion process is disclosed in US 2006/0236595. The process employs vegetable based oil as a raw material. The oil is blended with catalyst and absorption powders and heated. Thereafter, the resulting mixture is filtered.

US 2006/0053684 discloses a process for providing additives to convert contaminants extracted from wastewater into fuels. Contaminants that are processed include grease.

US 2,558,869 discloses a process for recovering waste cooking oils.

US 6,254,790 concerns a method for filtering suspended materials from cooking substances.

A method of refining glyceride oils is disclosed in EP 0 348 004.

A method for reconstituting used cooking oil is described in US 3,984,447.

FR 2 577 938 discloses a process for neutralising raw oils and an application for obtaining alcohol esters, with a view particularly to the manufacture of a fuel.

A mobile biodiesel refinery is described and shown in US 2005/006290.

Fuels derived from sewage sludge lipids and canola oil are described by Bahadur, N.P., et al., 'Liquid hydrocarbons from catalytic pyrolysis of sewage sludge lipid and canola oil: evaluation of fuel properties', Energy and Fuels, Vol. 9, No. 2, 1995, pages 248 to 256.

Accordingly, there is a need for an improved method of treating waste cooking oil in order to provide an environmentally acceptable solution to the removal of the waste oil and to provide a useable end product. It would be most advantageous if a method could be found for converting the waste cooking oil into a useable fuel.

The present invention provides a method as defined in claim 1.

The method of the present invention may be used to treat any waste cooking oil that is produced by a commercial oil-based cooking operation. Examples of waste cooking oils include vegetable oils, for example sunflower oil, rape seed oil, soya bean oil, and olive oil.

The method of the present invention relies upon allowing the waste oil to undergo a settling treatment at ambient temperatures, prior to subjecting the recovered oil to a filtering operation. It has been recognised in the art that waste oil produced by cooking operations contains a significant quantity of solid material and other impurities, which, if allowed to remain in the oil, would significantly impair the performance of the oil as a fuel. This is particularly the case where it is desired to use the waste oil as a fuel to be directly introduced into a conventionally configured internal combustion engine, such as a diesel engine. The fuel supply system to such engines would rapidly become blocked by any solid particles or other contaminants present in the oil as a result of the cooking processes. The approach applied currently to the processing of waste oil is therefore to heat the waste oil, in order to reduce the viscosity of the oil, and subject the heated oil to filtration through a series of progressively finer filters. It has been found that this approach does not produce a useable fuel product. Rather, the process allows many contaminants to remain in the oil, if not producing further contamination as a result of the heating of the oil.

In contrast, the process of the present invention relies upon a first separation employing a settling stage, conducted at ambient temperatures to treat the waste cooking oil and remove the bulk of the solid materials and other contaminants. In this respect, the term 'settling' is a reference to separation techniques that rely upon differences in the density or specific gravity of the fractions and/or phases present in the raw waste oil. Most conveniently, the settling treatment is one that relies upon gravity separation. However, mechanically induced settling techniques may be employed, as described hereinbelow. It is an advantage that the first separation stage of the present invention may be conducted without the addition of any components to the waste oil, such as is required in many of the known processes. Rather, the first separation stage is merely a separation of the components of the waste oil due to gravity, at ambient temperature.

It is to be noted in particular that the waste at this stage in the process is not heated and is allowed to settle at ambient temperatures. In this respect, ambient temperatures will be those prevailing in the environment of the processing apparatus and will typically range from 5°C to 35°C, depending upon the surrounding conditions, with a preference for operation at a temperature of from 20°C to 30°C. In general, the mechanism of separation of the components of the waste oil relies upon the difference in density of the various fractions. The process should be operated at temperatures at which the recovered oil fraction remains a liquid. The lower limit of temperature for the separation stage will thus be determined by the physical properties and chemical composition of the oil.

The settling step produces an oil fraction, that is an oil fraction from which solid material and other contaminants will have separated. The settling step will further produce a solid- or sludge-containing fraction, generally of higher specific gravity than the recovered oil fraction. In addition, depending upon the contents of the waste oil being processed, the settling step may produce an aqueous fraction. The aqueous fraction may contain dissolved or settled contaminants. Further, a lighter solid or sludge fraction may be produced from solid materials or contaminants that separate from the raw waste oil and have a lower specific gravity than the oil fraction.

It is particularly preferred that the temperature during the settling step is maintained substantially constant.

The settling step is carried out for a sufficient length of time to produce the desired yield of oil fraction. It will be appreciated that the degree of separation will increase with longer settling times. Thus, an oil fraction will be obtained within a settling time of 24 hours. A higher volume of oil fraction will be obtained within 48 hours. Longer settling times may be employed, if required.

It has been found that the rate of settling and separation of the various fractions from the waste oil may be affected by pressure, with elevated pressure increasing the settling rate. Accordingly, an elevated pressure of from 2 to 5 bara may be applied, if desired. Generally, it is more convenient to carry out the settling step at ambient pressure. If elevated pressures are applied, it is preferred that the pressure is held constant throughout the settling step.

It has been found that the processing of the raw waste oil by the method of the present invention does not require the addition of any settling agent or fines. It is known to attempt to increase settling by adding one or more settling or flocculating agents, such as magnesium silicate (commercially available as Magnasol®) or the like. However, it has been found that such settling agents do not improve the overall rate or efficiency of the separation. Further, the addition of a settling agent merely adds one further impurity to the oil, which may have a detrimental affect on the performance of the final product as a fuel. Accordingly, the settling step of the present invention is most preferably carried out without the addition of a settling agent or the like.

The settling step may be conducted using any suitable apparatus. Such apparatus are well known in the art and commercially available. In one embodiment, a simple settling tank is employed. The settling apparatus, in particular a settling tank, may be operated batchwise or continuously. In continuous operation, the residence time of the waste oil in the tank is selected in order to produce the desired yield of oil fraction. As noted, the oil fraction, from which the solid material and contaminants have been removed by settling, is typically of lower specific gravity than the settled solids contained in the sludge fraction. Accordingly, in a settling tank the oil fraction will be present as a layer above the sludge fraction. Separate removal of the oil fraction and sludge fraction may be achieved using suitably placed outlets, a floating suction hose, and/or a weir. Similarly, solid material that has floated to the top of the oil fraction may also be removed in similar manner. Generally, water present in the raw waste oil will separate as a layer of higher specific gravity and will lie beneath the oil fraction and, possibly, the sludge layer. Again, separation of the water layer is achieved using suitable outlets of known kind.

Alternatively, the separation of the fractions may be assisted mechanically. For example, the use of a centrifuge may improve the rate and efficiency of separation in the settling step. Suitable centrifuge apparatus is well known in the art and available commercially. One preferred centrifuge assembly is a disc-stack centrifuge, in which one or more disc assemblies are used to enhance the separation of the phases within the centrifuge.

The settling step may be conducted using either one of gravity separation or a mechanically assisted separation. Alternatively, the settling step may employ both forms of separation.

The settling treatment may be carried out as a single step or stage. Alternatively, settling may be carried out in multiple stages. The need for further settling stages and their number will be determined by the efficiency of the settling techniques being used. The efficiency is in turn determined, in part, by the specific gravity of the oil and the difference in the specific gravity between the clean oil fraction and the solid or sludge fraction. As will be appreciated, a greater difference between the specific gravity of the solid or sludge material and the oil will result in a faster separation due to settling.

The solid or sludge fraction recovered from the settling stage contains a significant amount of oil. This renders the recovered sludge useful as a fuel, for example for use in a process for energy production, for example for raising steam for use in a steam turbine. Depending upon the quality of the sludge fraction as a fuel, it may be used in combination with another fuel stuff in a co-fired combustion. For example, the sludge fraction may be mixed with straw, wood chips or other carboniferous material, prior to being combusted. Alternatively, depending upon its composition, the sludge fraction may be useable directly as a combustible fuel.

To assist the separation step, the waste oil to be treated may be subject to a first screening or straining step, in which the raw waste oil is passed through a large pore filter to remove large particles. This step is particularly useful to remove waste food particles and other detritus that may be left in the waste oil after the cooking operation. The straining step may be carried out using any suitable large pore filter assembly selected according to the nature and size of the solid particles and detritus present in the raw waste oil. Preferably the straining step is carried out using a filter assembly with filter pores in the range of from 200 to 600 microns, more preferably from 300 to 500 microns. Any suitable design of filter apparatus may be employed and suitable filter assemblies are known in the art and commercially available. A simple screen filter is one preferred apparatus.

If the raw waste oil is subjected to a first straining step, it is important that the oil is not heated and that the straining is carried out at ambient temperatures, as hereinbefore described.

In the second separation stage of the present invention, the oil fraction recovered from the settling operation of the first separation stage is subjected to filtration. It has been found that the use of a first separation stage employing settling to remove solid material and contaminants from the raw waste oil allows a simple filtration stage to be employed to purify the oil fraction to a level acceptable for it to be used as a fuel to be fed directly into the fuel system of an internal combustion engine. In particular, it has been found possible to use a single stage filtration to purify the oil fraction to the required level.

Further, due to the efficiency of the settling process in removing solid materials from the oil fraction, the oil fraction may be passed directly through a very fine filter assembly. This is in contrast to the alternative processes and conventional thinking, which generally relies upon a series of filter stages with decreasing pore size to filter the oil. Thus, the filtration stage may be carried out with a filter medium having a pore size in the range of from 0.5 to 10 micron, more particularly from 1 to 5 microns. This is a significant finding of the present invention. Commercially available internal combustion engines generally employ a filter system at the inlet side of the fuel system, to prevent solid particles from entering the fuel system and the engine. The OEM filter systems fitted to such engines typically employ filters with a pore size as fine as 4 micron. Thus, the process of the present invention allows the final filtration stage to be conducted using a 1 micron filter, that is significantly finer than the OEM specified filter system of the engines in which the oil fraction will be used. This in turn ensures that the oil fraction surpasses the purity requirements for use in the commercial engines.

The second separation operation may employ a plurality of filter stages to process the oil fraction. However, as noted, it has been found possible to use a single filtration stage with a filter of fine pore size, that is down to 1 micron in size or lower.

Filtration apparatus for use in the second separation stage to filter the oil fraction is known and is commercially available.

In order to improve the throughput of the filtration stage, it may be desired to warm the oil fraction, in order to reduce its viscosity. Accordingly, if required, the oil fraction may be warmed to a temperature of from 10° C to 30° C, more preferably from 15° C to 25° C. Heating to higher temperatures is not required and should be avoided to prevent deterioration of the usable properties of the oil.

The oil fraction recovered from the filtration stage of the second separation may be used directly as a fuel to be fed to the fuel system of an internal combustion engine. It is significant that the oil fraction produced by the process of the present invention may be used directly as a fuel, without the need to add any additives or to combine the oil with other fuelstuffs, such as has been required with the prior art processes. Tests on the operation of internal combustion engines using the oil fraction as the sole fuel have demonstrated that the fuel provides improved fuel economy, and a reduction in emissions.

Alternatively, the oil fraction may be used as a starting material in the preparation of biodiesel. Processes for the conversion of the oil fraction into biodiesel are known in the art and include prior art processes described hereinbefore.

As also noted, the oil fraction produced by the present invention may be used directly as a fuel for an internal combustion engine, in particular without further additives or admixture with another fuel stuff. Accordingly, in a further aspect, the present disclosure provides such a use.

According to a further embodiment of the present disclosure there is provided a method of operating an internal combustion engine, the method comprising feeding to the fuel inlet of the internal combustion engine an oil fraction obtained from a process as hereinbefore described.

The oil fraction may be heated before being fed to the inlet of the fuel system of the engine. This may be achieved by any suitable heating means. In one preferred arrangement, heated water from the cooling system of the engine is used to preheat the oil fraction. Any suitable heat exchanger may be used to exchange heat between the heated water and the oil fraction, with a counter current heat exchange arrangement being particularly suitable.

In one arrangement, the oil fraction of the present disclosure is used as a fuel to power an internal combustion engine that in turn drives a generator for generating electricity.

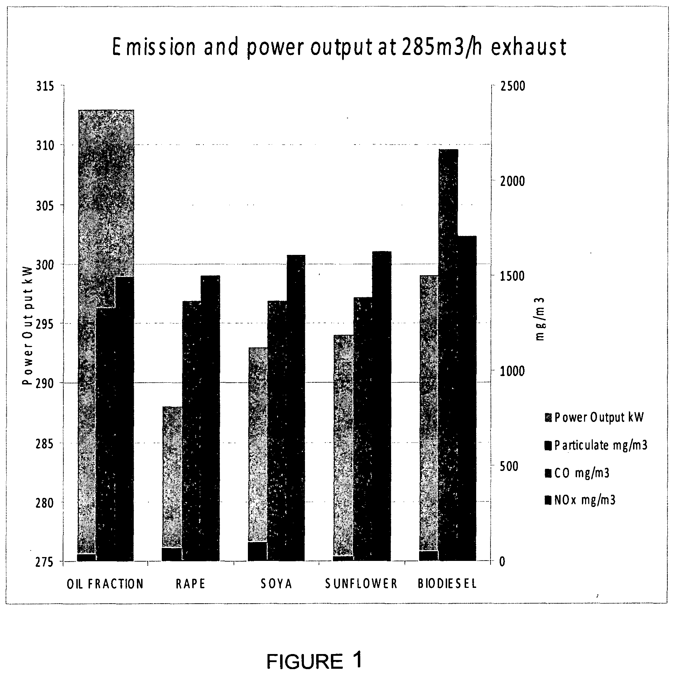

Embodiments of the present invention will now be described, for illustration only, by way of the following examples and the accompanying figure, as follows:
The figure is a graphical representation of data obtained from the testing of an oil fraction prepared according to the present invention as a fuel in an internal combustion engine, and comparison data obtained from the testing of existing commercially available fuels and other vegetable oils.

### EXAMPLE

### Preparation of oil fraction

Waste vegetable cooking oil was collected from a range of commercial cooking and catering operations. The waste vegetable oil included rape seed oil, soya oil and sunflower oil in varying amounts.

The waste cooking oil was treated to produce an oil fraction as follows:

The waste oil was passed through a filter screen having a pore size of 400 microns at an ambient temperature of about 15° C, in order to remove large solid particles and other matter. The thus filtered oil was introduced into a settling tank and allowed to stand, again at ambient temperature of about 15° C and atmospheric pressure for a period of 48 hours. Inspection of the contents of the settling tank after 48 hours revealed that the waste oil had separated into a substantially clear oil fraction and a sludge fraction, beneath the oil fraction, containing solid and dense material settled from the oil fraction. A minimal amount of light solid matter had collected on the surface of the oil fraction. This was removed by gently skimming the top of the clear oil, after which the oil fraction was decanted from the settling tank using a pump, without disturbing the sludge fraction.

The thus recovered oil fraction was passed through a heat exchanger and warmed by indirect heat exchange with hot water in a water jacket to a temperature of 20° C. The warmed oil fraction was passed by pumping through a filter assembly comprising a cylindrical filter screen having a pore size of 1 micron. The filtrate was collected as a clear oil fraction.

### Engine testing

The performance of the clear oil fraction as a fuel for an internal combustion engine was tested using a Volvo TWD 164 GE 547kWe diesel engine generating set. The oil fraction was pre-heated by indirect heat exchange with hot water from the cooling system of the engine, prior to being introduced directly into the inlet of the fuel system of the engine. No additives were added to the oil and the oil was used as recovered from the filtration stage of the separation process, without admixture with another fuel.

The emissions of the engine operating on the oil fraction were analysed. Particulate matter present in the exhaust gases was measured by a method based on BS 3405:1983 using SKC isokinetic stack sampling equipment. Oxides of nitrogen present in the exhaust gases were measured using a method based on ISO 10849. Sulphur dioxide content was determined using ISO 7935 methodology. Finally, the carbon monoxide and oxygen contents of the exhaust gases were measured using ISO 12039 methodology.

The power output of the engine at an exhaust gas flowrate of 285 m³/hr was also determined.

The results of the engine test and analysis are set out in the Table.

For comparison purposes, the engine test was repeated under identical operating conditions using as fuels: red diesel, rape seed oil, soya oil, sunflower oil and biodiesel. The results of these comparison tests are also set out in the Table.

**Table**

| Fuel Type | Oxygen (% vol) | Particulates (mg/Nm³ @ 3% O₂) | Carbon Monoxide (mg/Nm³ @ 3% O₂) | Oxides of Nitrogen NOₓ (as NO₂) (mg/Nm³ @ 3% O₂) | Sulphur Dioxide (mg/Nm³ @ 3% O₂) | Power Output* (kW) |
|---|---|---|---|---|---|---|
| **Oil Fraction** | **11.8** | **35** | **1328** | **1491** | **<1** | **313** |
| | | | | | | |
| Red Diesel | 11.5 | 42 | 1921 | 1757 | 18 | 288 |
| Rape Seed Oil | 11.7 | 70 | 1364 | 1498 | <1 | 288 |
| Soya Oil | 11.9 | 96 | 1367 | 1611 | <1 | 293 |
| Sunflower Oil | 11.9 | 24 | 1386 | 1637 | <1 | 294 |
| Biodiesel | 11.6 | 49 | 2164 | 1706 | <1 | 299 |

| | | | | | | |
|---|---|---|---|---|---|---|
| * Power output determined at an exhaust gas flowrate of 285 m³/hr. | | | | | | |

It will be noted from the Table, that the oil fraction produced by the present invention exhibited a significantly higher performance as a fuel than the comparison fuels. In particular, the level of emissions was generally comparable with or lower for the oil fraction than the comparison fuels, in particular considerably lower than the emissions for red diesel and biodiesel. Further, it will be noted that the power output achieved from the engine operating on the oil fraction was considerably higher than with the comparison fuels under the same operating conditions.

The data in the Table are set and represented graphically in the Figure, which clearly shows the improved performance and reduced environmental impact of the oil fraction obtained by the present invention.

## Claims

1. A method for recycling used oil, the used oil consisting of waste cooking oil, the method comprising:
subjecting the used oil to a first separation comprising a settling treatment at ambient temperatures, wherein the used oil is at ambient temperatures during the settling treatment, preferably a temperature in the range of from 5°C to 25°C, to produce an oil fraction and a sludge fraction;
separating the oil fraction and the sludge fraction; and
subjecting the oil fraction so separated to a second separation comprising filtration.

2. The method according to claim 1, wherein the waste cooking oil comprises one or more vegetable oils, preferably wherein the waste cooking oil comprises sunflower oil, rape seed oil, soya bean oil, olive oil, or a mixture thereof.

3. The method according to any preceding claim, wherein the settling treatment is conducted at constant temperature.

4. The method according to any preceding claim, wherein the settling treatment is conducted in a single stage.

5. The method according to any preceding claim, wherein the settling treatment employs gravity separation of the oil fraction and the sludge fraction, preferably wherein the settling treatment employs a settling tank, more preferably wherein the settling treatment is carried out for up to 48 hours.

6. The method according to any preceding claim, wherein the settling treatment employs mechanically enhanced separation, preferably wherein the settling treatment employs centrifugal separation.

7. The method according to any preceding claim, wherein the settling treatment is carried out without the addition of a settling or flocculating agent.

8. The method according to any preceding claim, wherein prior to the first separation stage, the waste cooking oil is subjected to a straining step, preferably employing a filter screen having a pore size in the range of from 200 to 600 microns, conducted at ambient temperature, preferably wherein the straining step is conducted in a single stage.

9. The method according to any preceding claim, wherein the second separation stage is conducted using a filter having a pore diameter of from 0.5 to 10 micron, more preferably from 1 to 5 micron.

10. The method according to any preceding claim, wherein the second separation stage consists of a single filtration step.

11. The method according to any preceding claim, wherein the oil fraction recovered from the first separation stage is warmed before passing to the second separation stage, preferably wherein the oil fraction is warmed to a temperature of from 10° C to 30° C.

12. The method according to any of claims 1 to 11, further comprising feeding the oil fraction to the fuel inlet of an internal combustion engine, preferably wherein the oil fraction is the sole fuel provided to the fuel inlet of the engine, more preferably wherein the oil fraction is heated prior to entering the fuel inlet of the engine, especially wherein the engine comprises a water cooling system and the oil fraction is heated by indirect heat exchange with water from the cooling system of the engine.

## Patentansprüche

1. Verfahren zum Wiederverwerten von gebrauchtem Öl, wobei das gebrauchte Öl aus Küchen-Altöl besteht, wobei das Verfahren Folgendes umfasst:
Unterziehen des gebrauchten Öls einer ersten Abscheidung, umfassend eine Absetzbehandlung bei Umgebungstemperaturen, wobei das gebrauchte Öl während der Absetzbehandlung Umgebungstemperaturen aufweist, vorzugsweise eine Temperatur im Bereich von 5 °C bis 25 °C, um einen Ölanteil und einen Rückständeanteil zu erzeugen;
Abscheiden des Ölanteils und des Rückständeanteils und
Unterziehen des derart abgeschiedenen Ölanteils einer zweiten Abscheidung, die Filtration umfasst.

2. Verfahren nach Anspruch 1, wobei das Küchen-Altöl ein oder mehrere Pflanzenöle umfasst, vorzugsweise wobei das Küchen-Altöl Sonnenblumenöl, Rapsöl, Sojaöl, Olivenöl oder eine Mischung daraus umfasst.

3. Verfahren nach einem vorhergehenden Anspruch, wobei die Absetzbehandlung bei konstanter Temperatur durchgeführt wird.

4. Verfahren nach einem vorhergehenden Anspruch, wobei die Absetzbehandlung in einer einzelnen Stufe durchgeführt wird.

5. Verfahren nach einem vorhergehenden Anspruch, wobei bei der Absetzbehandlung eine Schwerkraftabscheidung des Ölanteils und des Rückständeanteils verwendet wird, wobei bei der Absetzbehandlung vorzugsweise ein Absetztank verwendet wird, wobei die Absetzbehandlung vorzugsweise bis zu 48 Stunden lang ausgeführt wird.

6. Verfahren nach einem vorhergehenden Anspruch, wobei bei der Absetzbehandlung eine mechanisch verstärkte Abscheidung verwendet wird, wobei bei der Absetzbehandlung vorzugsweise eine Zentrifugaltrennung verwendet wird.

7. Verfahren nach einem vorhergehenden Anspruch, wobei die Absetzbehandlung ohne Zusetzen eines Absetz- oder Flockungsmittels ausgeführt wird.

8. Verfahren nach einem vorhergehenden Anspruch, wobei vor der ersten Abscheidungsstufe das Küchen-Altöl einem Schritt des Durchseihens unterzogen wird, bei dem vorzugsweise ein Filtersieb mit einer Porengröße im Bereich von 200 bis 600 Mikrometer verwendet und dies bei Umgebungstemperaturen durchgeführt wird, wobei der Schritt des Durchseihens vorzugsweise in einer einzelnen Stufe durchgeführt wird.

9. Verfahren nach einem vorhergehenden Anspruch, wobei die zweite Abscheidungsstufe unter Verwendung eines Filters mit einem Porendurchmesser von 0,5 bis 10 Mikrometer, vorzugsweise von 1 bis 5 Mikrometer, durchgeführt wird.

10. Verfahren nach einem vorhergehenden Anspruch, wobei die zweite Abscheidungsstufe aus einem einzelnen Filtrationsschritt besteht.

11. Verfahren nach einem vorhergehenden Anspruch, wobei der aus der ersten Abscheidungsstufe zurückgewonnene Ölanteil erwärmt wird, bevor er zum zweiten Abscheidungsschritt geleitet wird, wobei der Ölanteil vorzugsweise auf eine Temperatur von 10 °C bis 30 °C erwärmt wird.

12. Verfahren nach einem der Ansprüche 1 bis 11, ferner das Einspeisen des Ölanteils in den Kraftstoffeinlass eines Verbrennungsmotors umfassend, wobei der Ölanteil vorzugsweise der einzige Kraftstoff ist, der zum Kraftstoffeinlass des Motors geführt wird, wobei der Ölanteil bevorzugt erhitzt wird, bevor er in den Kraftstoffeinlass des Motors eintritt, wobei der Motor insbesondere ein Wasserkühlsystem umfasst und der Ölanteil durch indirekten Wärmeaustausch mit Wasser von dem Kühlsystem des Motors erhitzt wird.

## Revendications

1. Procédé de recyclage d'huile usagée, l'huile usagée étant composée d'huile de cuisson usée, le procédé comprenant :
soumission de l'huile usagée à une première séparation comprenant un traitement de décantation à températures ambiantes, l'huile usagée se trouvant à températures ambiantes pendant le traitement de décantation, de préférence à une température dans la plage de 5 °C à 25 °C, en vue de produire une fraction d'huile et une fraction de boues ;
séparation de la fraction d'huile et de la fraction de boues ; et
soumission de la fraction de boues ainsi séparée à une deuxième séparation comprenant la filtration.

2. Procédé selon la revendication 1, l'huile de cuisson usée comprenant une ou plusieurs huiles végétales, l'huile de cuisson usée comprenant de préférence de l'huile de tournesol, de l'huile de colza, de l'huile de soja, de l'huile d'olive ou un mélange de celles-ci.

3. Procédé selon l'une quelconque des revendications précédentes, le traitement de décantation étant effectué à une température constante.

4. Procédé selon l'une quelconque des revendications précédentes, le traitement de décantation étant effectué en une seule phase.

5. Procédé selon l'une quelconque des revendications précédentes, le traitement de décantation employant la séparation par gravité de la fraction d'huile et de la fraction de boue, le traitement de décantation employant de préférence un bac de décantation, plus préférablement le traitement de décantation étant effectué pendant une durée pouvant atteindre 48 heures.

6. Procédé selon l'une quelconque des revendications précédentes, le traitement de décantation employant une séparation améliorée mécaniquement, le traitement de décantation employant la séparation centrifuge.

7. Procédé selon l'une quelconque des revendications précédentes, le traitement de décantation étant effectué sans ajout d'un agent de décantation ou floculant.

8. Procédé selon l'une quelconque des revendications précédentes, selon lequel, avant la première phase de séparation, l'huile de cuisson usée étant soumise à une étape de filtrage, de préférence en utilisant un tamis filtrant ayant une taille de pores dans la plage de 200 à 600 microns, effectuée à température ambiante, l'étape de filtrage étant de préférence effectuée en une seule phase.

9. Procédé selon l'une quelconque des revendications précédentes, la deuxième phase de préparation étant effectuée en utilisant un filtre ayant un diamètre de pores de 0,5 à 10 microns, de préférence de 1 à 5 microns.

10. Procédé selon l'une quelconque des revendications précédentes, la deuxième phase de préparation consistant en une étape de filtration unique.

11. Procédé selon l'une quelconque des revendications précédentes, la fraction d'huile récupérée de la première phase de préparation étant chauffée avant d'être transférée à la deuxième phase de préparation, la fraction d'huile étant de préférence chauffée à une température de 10 °C à 30 °C.

12. Procédé selon l'une quelconque des revendications 1 à 11, comprenant en outre l'acheminement de la fraction d'huile à l'arrivée de carburant d'un moteur à combustion interne, la fraction d'huile étant de préférence le seul carburant fourni à l'arrivée de carburant du moteur, plus préférablement la fraction d'huile étant chauffée avant d'entrer dans l'arrivée de carburant du moteur, le moteur comprenant notamment un système de refroidissement par eau et la fraction d'huile étant chauffée par échange de chaleur indirect avec l'eau issue du système de refroidissement du moteur.
